# EUROPÄISCHE PATENTSCHRIFT

(11) **EP 3 051 139 B1**
(45) Veröffentlichungstag und Bekanntmachung des Hinweises auf die Patenterteilung: **12.12.2018**
(21) Anmeldenummer: 15152904.7
(22) Anmeldetag: 28.01.2015
(51) Int. Cl.: F04D 19/04, F04D 29/056, F04D 29/52

(54) **Vakuumpumpe**
Vacuum pump
Pompe à vide

(43) Veröffentlichungstag der Anmeldung: 03.08.2016
(73) Patentinhaber: PFEIFFER VACUUM GMBH, 35614 Asslar (DE)
(72) Erfinder: Bader, Florian, 35625 Hüttenberg (DE); Hofmann, Jan, 35305 Grünberg (DE)
(74) Vertreter: Manitz Finsterwald Patentanwälte PartmbB

(56) Entgegenhaltungen:
- EP-A1- 2 868 929
- EP-A2- 2 728 194
- DE-A1- 3 708 663
- US-A1- 2008 283 125

## Beschreibung

Die vorliegende Erfindung betrifft eine Vakuumpumpe, insbesondere Turbomolekularpumpe mit einem Gehäuse, einer drehbar gelagerten Welle für zumindest eine Pumpstufe und einer in einem Ansaugbereich der Vakuumpumpe gelegenen Halterung für ein Lager zur Lagerung der Welle.

Vakuumpumpen werden in unterschiedlichen technischen Gebieten, beispielsweise bei der Halbleiterherstellung, eingesetzt, um ein für einen jeweiligen Prozess erforderliches Vakuum zu schaffen. In vielen Fällen wird zur Schaffung des erforderlichen Vakuums eine hohe Pumpleistung benötigt, so dass die Pumpstufe mit hohen Drehzahlen betrieben werden muss. Dies bedeutet wiederum, dass an die Lagerung der Welle der Pumpstufe hohe Anforderungen gestellt werden. Die Halterung für das Lager zur Lagerung der Welle muss daher entsprechend stabil ausgestaltet sein.

Bei bekannten Vakuumpumpen - eine Vakuumpumpe gemäß dem Oberbegriff des Anspruchs 1 ist beispielsweise aus der EP 2 728 194 A1 oder der DE 37 08 663 A1 bekannt - weist die Halterung einen das Lager aufnehmenden Zentralabschnitt und eine Mehrzahl von sich zumindest im Wesentlichen in radialer Richtung erstreckenden Streben auf. Die Streben verbinden den Zentralabschnitt mit einem mit dem Gehäuse verbundenen Gehäusering. Da die Halterung in dem Ansaugbereich der Vakuumpumpe liegt, behindert sie das Einströmen des abzupumpenden Gases. Mit anderen Worten bildet die Halterung ein strömungstechnisches Hindernis, das die Leistungsfähigkeit der Vakuumpumpe herabsetzt. Da die Halterung jedoch die erheblichen Kräfte zuverlässig aufnehmen muss, die bei Betrieb der Vakuumpumpe im Bereich der Lagerung der Welle auftreten, ist sie herkömmlicherweise vergleichsweise massiv ausgestaltet. Die Streben der Halterung weisen dabei üblicherweise einen konstanten rechteckigen Querschnitt auf, der bei einer entsprechenden Dimensionierung die erforderliche Radial- und Axialsteifigkeiten bereitstellt.

Durch aufwendige Untersuchungen wurde von den Erfindern erkannt, dass die größten Belastungen der Streben überraschenderweise an den radial innenliegenden bzw. radial außenliegenden Endbereichen der Streben auftreten. Es wurde ferner festgestellt, dass die in einem in radialer Richtung mittleren Bereich der Streben auftretenden Belastungen deutlich niedriger sind als bisher angenommen. Auf diese Erkenntnisse fußt die Lösung der der vorliegenden Erfindung zugrundeliegenden Aufgabe, eine Vakuumpumpe mit erhöhter Effizienz bereitzustellen. Zur Verringerung des Strömungswiderstands der Halterung ist erfindungsgemäß nämlich vorgesehen, bei zumindest einer der Streben in einem radial mittleren Bereich eine Einschnürung vorzusehen.

Mit anderen Worten ist zumindest eine der Streben, insbesondere alle Streben, tailliert oder eingeschnürt, so dass der der durch die Strebe verursachte Strömungswiderstand reduziert wird. Endbereiche der Strebe können massiver ausgestaltet sein, um die in diesen Bereichen auftretenden größeren Belastungen zuverlässig aufzunehmen. Trotz einer Verringerung des Querschnitts im mittleren Bereich der Strebe wird die Steifigkeit der Halterung nicht nachteilig beeinflusst. Sowohl die Steifigkeit der Halterung in einer axialen Richtung als auch deren Torsionssteifigkeit ist trotz der erfindungsgemäßen Maßnahme, den mittleren Bereich der Streben "schlanker" zu gestalten als den mittleren Bereich angebende Abschnitte der Strebe, hinreichend groß, um eine zuverlässige Festlegung der axialen Lage des Lagers zu gewährleisten. Gleichzeitig wird durch die Einschnürung der Strebe eine Reduktion des Strömungswiderstands der Halterung erzielt, der zu einer nicht unerheblichen Effizienzsteigerung der Vakuumpumpe führt.

Weitere Ausführungsformen der Erfindung sind in der Beschreibung, den Ansprüchen und den beigefügten Zeichnungen angegeben.

Gemäß einer Ausführungsform der Vakuumpumpe liegt der mittlere Bereich in einer axialen Projektion zumindest abschnittsweise, insbesondere vollständig in einem radialen Bereich, der durch einen eine Pumpwirkung erzeugenden Abschnitt zumindest eines rotierenden Elements der Pumpstufe definiert ist. Bei einer Turbomolekularpumpe kann dieses Element beispielsweise eine Rotorscheibe sein, die an der vorstehend genannten Welle befestigt ist. Der eine Pumpwirkung erzeugende Abschnitt ist in diesem Fall ein Ringbereich der Rotorscheibe mit angestellten Rotorblättern, die eine Pumpwirkung erzeugen. Die Einschnürung der Strebe liegt - in axialer Richtung gesehen - bei dieser Ausführungsform somit zumindest abschnittsweise, insbesondere vollständig in dem genannten Ringbereich. Die Einschnürung oder Taillierung der zumindest einen Strebe entfaltet bei dieser Ausführungsform ihre größte effizienzsteigernde Wirkung. In radialer Richtung außerhalb des Ringbereichs können die Streben dicker sein, da sie dort weniger zum Strömungswiderstand der Halterung beitragen.

Ein Übergangsabschnitt, der zwischen dem Zentralabschnitt und dem mittleren Bereich und/oder zwischen dem mittleren Bereich und dem Gehäusering liegt, kann sich zu dem mittleren Bereich hin verjüngen. Derartige Übergangsbereiche bilden somit - wie der Begriff bereits andeutet - einen Übergang von dem mittleren Bereich zu dem Zentralabschnitt bzw. zu dem Gehäusering hin. Diese Bereiche können massiver ausgeführt sein, da - wie eingangs erläutert - in den Endbereichen der Streben die größten Belastungen auftreten. Mit anderen Worten sind die Übergangsabschnitte - falls vorhanden - zusätzlich zu der Einschnürung vorhanden. Der mittlere Bereich zwischen den Übergangsbereichen weist somit keine im Wesentlichen konstante Querschnittsgeometrie auf, sondern ist - zumindest lokal - tailliert.

Insbesondere weist der Übergangsabschnitt zwischen dem Zentralabschnitt und dem mittleren Bereich einen im Mittel größeren Querschnitt und/oder eine - in axialer Richtung gesehen - größere Fläche auf als der Übergangsabschnitt zwischen dem mittleren Bereich und dem Gehäusering.

Eine in einer axialen Richtung gesehene Kontur zumindest einer der Seiten des mittleren Bereichs ist zumindest abschnittsweise relativ zu der Längserstreckung der Strebe schräg angeordnet. Dadurch wird eine - in axialer Richtung gesehen - zumindest einseitige Taillierung oder Einschnürung der zumindest einen Strebe erreicht.

Alternativ oder zusätzlich ist - in einer durch die Welle und eine Längserstreckung der Strebe aufgespannten Ebene gesehen - eine Kontur zumindest einer der Seiten des mittleren Bereichs zumindest abschnittsweise gekrümmt und/oder relativ zur Längserstreckung der Strebe schräg angeordnet sein. Auch diese Maßnahme führt zu einer zumindest einseitigen Einschnürung/Taillierung der Strebe in der genannten Ebene.

Beispielsweise ist die Kontur - sei es die in einer axialen Projektion gesehene Kontur oder die in der vorstehend definierten Ebene gesehene Kontur - zumindest abschnittsweise konkav. Es ist auch vorstellbar, dass die zumindest eine Strebe in axialer und/oder tangentialer Richtung doppelt konkav ausgeführt ist.

Alternativ oder zusätzlich weist die in einer axialen Projektion gesehene Kontur zumindest einer der Seiten des mittleren Bereichs eine zwischen dem Zentralabschnitt und dem Gehäusering oder - falls vorhanden - zwischen den Übergangsabschnitten eine zumindest abschnittsweise, insbesondere durchgehende Krümmung oder Neigung relativ zu der Längserstreckung der Strebe auf. Dabei variiert die Krümmung/Neigung.

Zumindest eine Oberfläche der Strebe kann in einer Richtung senkrecht zur Längserstreckung der Strebe eine Krümmung aufweisen, um eine Reduktion des durch die Strebe hervorgerufenen Strömungswiderstandes zu erzielen.

Gemäß einer Ausführungsform der vorliegenden Erfindung bildet eine in axialer Richtung gesehene obere Fläche und/oder untere Fläche der Strebe zumindest abschnittsweise eine Kegelmantelfläche. Es ist durchaus vorstellbar, dass zumindest der mittlere Bereich der Strebe abschnittsweise einem diaboloähnlichen Doppelkegel ähnelt.

Zumindest eine Oberfläche der Strebe kann in einer Richtung senkrecht zur Längserstreckung der Strebe geneigt sein. Insbesondere ist eine keilförmige Ausgestaltung der Oberfläche der Strebe denkbar, bevorzugt an der der Ansaugseite der Vakuumpumpe zugewandten Oberfläche der Strebe.

Die Strebe kann einstückig, insbesondere gefügekontinuierlich mit dem Gehäusering und/oder dem Zentralabschnitt verbunden sein. Insbesondere ist die Halterung als Ganzes einstückig ausgebildet.

Zwar ist es durchaus möglich, den Gehäusering so auszugestalten, dass er lösbar an dem Gehäuse befestigt ist. Bevorzugt ist jedoch eine einstückige Ausgestaltung des Gehäuserings mit dem Gehäuse.

Die zumindest eine Strebe kann im Querschnitt eine ovale oder gerundete, insbesondere kreisförmige Grundform aufweisen. Jedoch ist es auch durchaus möglich, eine rechteckige, insbesondere quadratische Grundform der Strebe vorzusehen.

Gemäß einer Ausführungsform der erfindungsgemäßen Vakuumpumpe umfasst die Halterung genau drei Streben, die insbesondere in Umfangsrichtung gleichmäßig verteilt angeordnet sind. In besonderen Fällen, beispielsweise wenn eine besonders hohe Axial- und/oder Torsionsfestigkeit bereitgestellt werden muss, ist auch das Vorsehen von mehr als drei Streben denkbar.

Nachfolgend wird die Erfindung rein beispielhaft anhand vorteilhafter Ausführungen unter Bezugnahme auf die beigefügten Zeichnungen beschrieben. Es zeigen:
- Fig. 1: eine Vakuumpumpe in einem Querschnitt,
- Fig. 2: eine Ausführungsform einer Halterung einer erfindungsgemäßen Vakuumpumpe,
- Fig. 3: einen Querschnitt durch die Halterung der Fig. 2 in einer Ebene parallel zur Längserstreckung einer Strebe der Halterung,
- Fig. 4: einen Querschnitt durch eine der Streben der Halterung gemäß Fig. 2,
- Fig. 5 und 6: eine weitere Ausführungsform einer Strebe in verschiedenen Ansichten,
- Fig. 7: eine weitere Ausführungsform einer Strebe,
- Fig. 8 und 9: eine mögliche Querschnittsform der Streben und
- Fig. 10: eine weitere Ausführungsform der Strebe einer Halterung einer erfindungsgemäßen Vakuumpumpe.

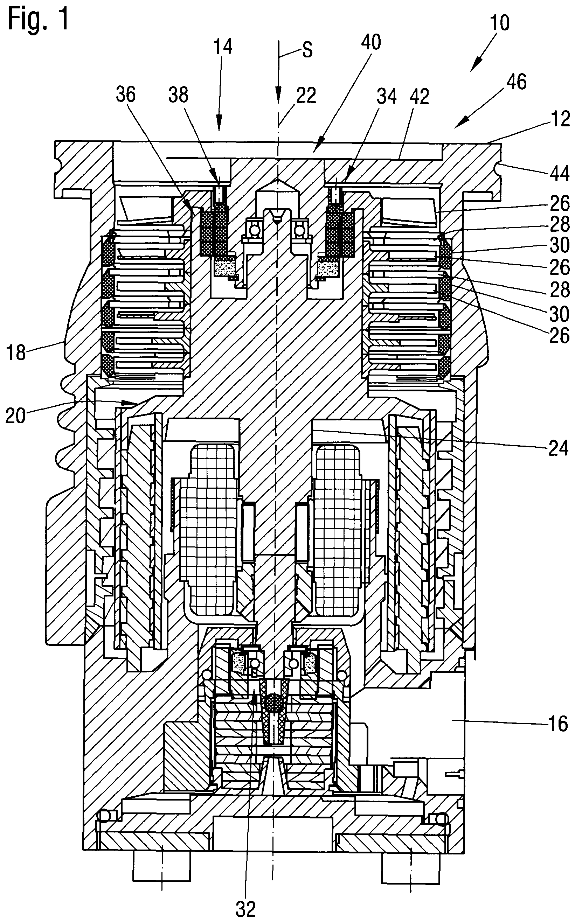

Die in Fig. 1 gezeigte Vakuumpumpe 10 umfasst einen von einem Einlassflansch 12 umgebenen Pumpeneinlass 14, durch den das abzupumpende Gas in einer Strömungsrichtung S in die Pumpe 10 einströmt (Ansaugseite), und einen Pumpenauslass 16 sowie mehrere Pumpstufen zur Förderung des an dem Pumpeneinlass 14 anstehenden Gases zu dem Pumpenauslass 16 (Ausstoßseite). Die Vakuumpumpe 10 umfasst ein Gehäuse 18 und einen in dem Gehäuse 18 angeordneten Rotor 20 mit einer um eine Rotationsachse 22 drehbar gelagerten Rotorwelle 24.

Die Pumpe 10 ist im vorliegenden Ausführungsbeispiel als Turbomolekularpumpe ausgebildet und umfasst mehrere pumpwirksam miteinander in Serie geschaltete turbomolekulare Pumpstufen mit mehreren an der Rotorwelle 24 befestigten radialen Rotorscheiben 26 und zwischen den Rotorscheiben 26 angeordneten und in dem Gehäuse 18 festgelegten Statorscheiben 28. Die Statorscheiben 28 sind durch Abstandsringe 30 in einem gewünschten axialen Abstand zueinander gehalten.

Den turbomolekularen Pumpstufen sind vier in radialer Richtung ineinander angeordnete und pumpwirksam miteinander in Serie geschaltete Holweck-Pumpstufen nachgeschaltet, auf die an dieser Stelle jedoch nicht im Einzelnen eingegangen wird. Zur Lagerung der Rotorwelle 24 sind ein Wälzlager 32 im Bereich des Pumpenauslasses 16 und ein Permanentmagnetlager 34 im Bereich des Pumpeinlasses 14 vorgesehen.

Das Permanentmagnetlager 34 umfasst eine rotorseitige Lagerhälfte 36 und eine statorseitige Lagerhälfte 38, welche jeweils einen Ringstapel aus mehreren in axialer Richtung aufeinander gestapelten permanentmagnetischen Ringen umfassen. Die Magnetringe liegen einander unter Ausbildung eines radialen Lagerspalts gegenüber. Das in dem Lagerspalt vorhandene magnetische Feld ruft magnetische Abstoßungskräfte zwischen den Magnetringen hervor, welche eine radiale Lagerung der Rotorwelle 24 bewirken.

Die statorseitige Lagerhälfte 38 ist von einem statorseitigen Trägerabschnitt 40 getragen, welcher sich durch die Magnetringe hindurch erstreckt und der an radialen Streben 42 (in Fig. 1 ist nur eine Strebe 42 im Längsabschnitt zu sehen) aufgehängt ist. Die Streben 42 erstrecken sich von dem zentral im Bereich des Pumpeinlasses 14 gelegenen Trägerabschnitts 40 in radialer Richtung zu einem Gehäusering 44 hin, der auch den Einlassflansch 12 umfasst. Der Gehäusering 44 ist bei der Vakuumpumpe 10 einstückig mit dem Gehäuse 18 ausgebildet. Abweichend von der dargestellten Bauform kann der Trägerabschnitt 40 - der aufgrund seiner Positionierung auch als Zentralabschnitt bezeichnet werden kann - einstückig mit den Streben 42 ausgebildet sein.

Es versteht sich, dass sowohl der Abschnitt 40 als auch die Streben 42 und der Gehäusering 44 so dimensioniert sein müssen, dass sie das Permanentmagnetlager 34 zuverlässig in der vorgesehenen räumlichen Lage fixieren. Es treten nämlich im Betrieb der Vakuumpumpe 10 erhebliche Kräfte auf, da die Rotorwelle 24 mit sehr hohen Drehzahlen rotiert, um die gewünschte Pumpleistung zu erzeugen. Dies wiederum bedeutet, dass das Permanentmagnetlager 34 hohe Kräfte aufnehmen muss, die wiederum über den Abschnitt 40, die Streben 42 und den Gehäusering 44 auf das Gehäuse 18 übertragen werden.

Der Träger- oder Zentralabschnitt 40, die Streben 42 und der Gehäusering 44 bilden somit letztlich eine Halterung 46 für das Permanentlager 34. Für die Axial- und Torsionssteifigkeit der Halterung 46 ist die Ausgestaltung der Streben 42 von erheblicher Bedeutung.

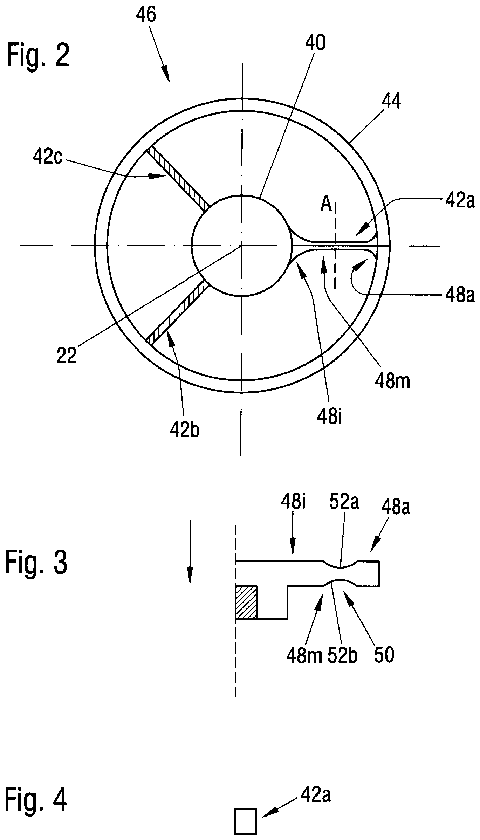

Fig. 2 zeigt eine Ausführungsform der Halterung 46 in einer axialen Ansicht. Koaxial zu der Rotationsachse 22 ist der Abschnitt 40 angeordnet, der im vorliegenden Beispiel eine im Wesentlichen kreisrunde Form aufweist. Es versteht sich, dass der Zentralabschnitt 40 bei Bedarf grundsätzlich jede beliebige Form aufweisen kann.

Der Abschnitt 40 ist konzentrisch von dem Gehäusering 44 umgeben, der lösbar oder einstückig mit dem Gehäuse 18 verbunden sein kann. Die Verbindung zwischen dem Gehäusering 44 und dem Abschnitt 40 wird durch die Streben 42a, 42b, 42c hergestellt. Im vorliegenden Beispiel sind drei Streben 42a, 42b, 42c vorgesehen. Grundsätzlich können aber natürlich auch mehr oder weniger Streben vorgesehen sein. Die Streben 42a, 42b, 42c sind in Umfangsrichtung gleichmäßig verteilt, so dass man bildlich auch von einer Sternstrebe sprechen kann. Zur Vereinfachung sind die Streben 42b, 42c lediglich schematisch dargestellt. In der Regel weisen die Streben 42a, 42b, 42c eine im Wesentlichen identische Geometrie auf. In bestimmten Anwendungsfällen kann von dieser Regel jedoch auch abgewichen werden und die einzelnen Streben 42a, 42b, 42c können unterschiedlich ausgestaltet sein.

Die Strebe 42a weist einen Übergangsbereich 48i auf, der an ihrem radial inneren Ende einen Übergang zwischen dem Trägerabschnitt 40 und einem Mittelabschnitt 48m der Strebe 42a bildet. In der axialen Ansicht verjüngt sich die Strebe 42a im Bereich des Übergangsabschnitts 48i bis sie im Bereich des Mittelabschnitts 48m eine in axialer Sicht im Wesentlichen konstante Breite aufweist. In einem zweiten Übergangsabschnitt 48a geht die Strebe 42a an ihrem radial äußeren Ende in den Gehäusering 44 über. Mit anderen Worten umfasst die Strebe 42a drei Abschnitte, nämlich in radialer Richtung von innen nach außen gesehen einen radial inneren Übergangsabschnitt 48i, einen Mittelabschnitt 48m und einen radial außen vorgesehenen Übergangsabschnitt 48a. Die Übergangsabschnitte 48i, 48a können auch weggelassen werden, so dass die Strebe 42a ohne einen sich verbreiternden Abschnitt in den Abschnitt 40 und/oder den Gehäusering 44 übergeht.

Die Streben 42a, 42b, 42c mit einem Mittelabschnitt zu versehen, der einen im Wesentlichen konstanten Querschnitt aufweist, ist grundsätzlich bekannt. Diese Bauweise wird herkömmlicherweise auch als zwingend nötig erachtet, um eine hinreichend stabile Halterung bereitstellen zu können. Erfindungsgemäß wurde jedoch erkannt, dass die Streben 42a, 42b, 42c in dem Mittelabschnitt 48m eine zusätzliche Taillierung oder Einschnürung aufweisen können, durch die Material eingespart wird und durch die auch eine Verringerung des Strömungswiderstands, der durch die Halterung 46 hervorgerufen wird, erzielt werden kann, ohne dass die Steifigkeit der Halterung 46 beeinträchtigt wird.

Beruhend auf dieser Erkenntnis wird erfindungsgemäß eine Taillierung der Streben 42a, 42b, 42c vorgesehen, die beispielhaft anhand des in Fig. 3 gezeigten Längsquerschnitts der Strebe 42a verdeutlicht wird (siehe Fig. 3). Die Strebe 42a weist im Mittelabschnitt 48m eine Einschnürung 50 auf. Die Einschnürung 50 wird durch eine Reduzierung der Dicke der Strebe 42a in dem Mittelabschnitt 48m erreicht. Sowohl die Oberseite der Strebe 42a als auch deren Unterseite sind abschnittsweise konkav ausgebildet. Eine zumindest im Mittelabschnitt 48m durchgehende Krümmung ist auch denkbar. In der gezeigten Schnittebene, die durch die Längserstreckung der Strebe 42a und die Rotationsachse 22 aufgespannt wird, wird die Einschnürung 50 durch konkave Konturen 52a, 52b definiert. Es versteht sich, dass auch lediglich die Oberseite oder die Unterseite der Strebe 42a im Bereich der Einschnürung 50 mit einer konkaven Kontur 52a bzw. 52b versehen sein kann.

Abweichend von der dargestellten Form der Konturen 52a, 52b können beliebige Konturen vorgesehen sein, die eine Reduzierung der Querschnittsgeometrie der Strebe 42a hervorrufen. Gekrümmte und/oder gerade schräge Abschnitte können beliebig kombiniert werden. Die Konturen 52a, 52b müssen auch nicht symmetrisch ausgebildet sein. Wesentlich ist lediglich, dass die Steifigkeit der Halterung 46 nicht kompromittiert wird. Wo und in welcher Form die Querschnittsreduzierung in dem Mittelabschnitt 48m vorgesehen wird, hängt von den Randbedingungen ab, die sich aus den im Betrieb zu erwartenden Belastungen ergeben, die auf die Halterung 46 wirken.

Grundsätzlich ist es auch denkbar, dass der Mittelabschnitt 48m direkt mit dem Abschnitt 40 und dem Gehäusering 44 in Kontakt steht, d.h. dass keiner oder nur einer der Übergangsabschnitte 48i, 48a vorhanden sind. Trotzdem ist die Einschnürung 50 vorgesehen, die - wie vorstehend beschrieben - auf die verschiedensten Arten realisiert werden kann. Beispielsweise kann auch zusätzlich oder alternativ zu der in Fig. 3 gezeigten Einschnürung 50, die zu einer Querschnittsreduktion der Strebe 42a in axialer Richtung führt, eine Einschnürung vorgesehen sein, durch die die Breite der Strebe 42a lokal reduziert wird ("Einschnürung in Umfangsrichtung").

Fig. 4 zeigt einen Querschnitt durch die Strebe 42a in der Schnittebene A, die parallel zu der Rotationsachse 22 verläuft und die senkrecht zu der Längserstreckung der Strebe 42a angeordnet ist. Es ist zu erkennen, dass die Strebe 42a in diesem Bereich eine im Wesentlichen quadratische Querschnittsform aufweist. Grundsätzlich ist natürlich auch eine andere Querschnittsform denkbar, beispielsweise ein rechteckiger, kreisförmiger oder ovaler Querschnitt. Auch in Zusammenhang mit der Querschnittsform der Strebe 42a ist festzuhalten, dass grundsätzlich jede beliebige Querschnittsform vorgesehen sein kann, solange die Halterung 46 als Ganzes die geforderte Steifigkeit aufweist.

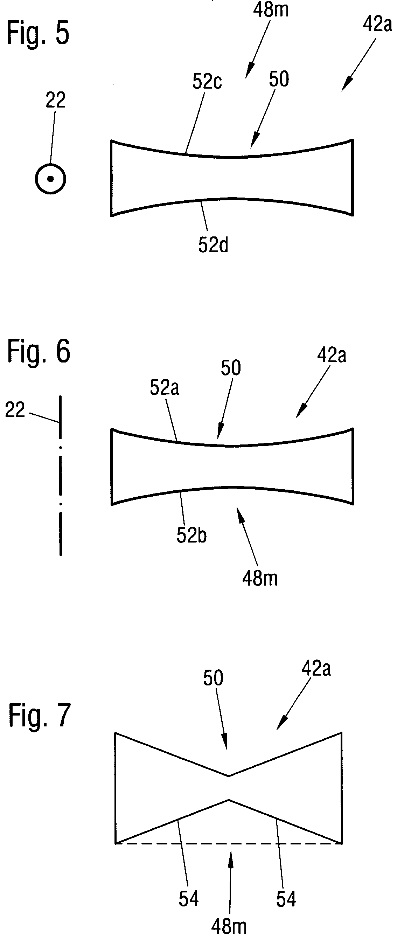

Die Fig. 5 und 6 zeigen eine Strebe 42a, bei der sich die Einschnürung 50 von dem radial inneren Ende der Strebe 42a bis zu deren radial äußeren Ende erstreckt. Die Einschnürung 50 ist nicht symmetrisch ausgebildet, um zu verdeutlichen, dass deren Ausgestaltung ganz frei an die jeweils vorliegenden Erfordernisse angepasst werden kann. Fig. 5 zeigt die Strebe 42a in einer axialen Sicht, während Fig. 6 eine Sicht auf die Strebe 42a in einer Ebene zeigt, die durch die Rotationsachse 22 und die Längserstreckung der Strebe 42a aufgespannt wird. Sowohl Konturen 52c, 52d der Strebe 42a in einer axialen Sicht als auch die Konturen 52a, 52b der Strebe 42a in einer Seitenansicht weisen einen konkaven Verlauf auf.

Wenn man die radialen Randbereiche der Strebe 42a der Fig. 5 und 6 als Übergangsbereiche der Abschnitte 48i, 48a der Strebe 42a der Fig. 2 und 3 auffasst, so ist erkennbar, dass zusätzlich zu der Verjüngung der genannten Abschnitte 48i, 48a eine Einschnürung der Strebe 42a in dem Mittelbereich 48m vorliegt. Zusätzlich zu der randlichen Verjüngung der Strebe 42a liegt somit eine Taillierung der Strebe 42a in einem mittleren Bereich vor.

Fig. 7 zeigt eine Ausführungsform der Strebe 42a, bei der die Einschnürung 50 durch schräge Geraden 54 erzeugt wird. Bei einer rotationssymmetrischen Ausgestaltung des Querschnitts der Strebe 42a in dem Mittelabschnitt 48m erhält man die Geometrie eines Doppelkegels.

Die gestrichelte Linie in Fig. 7 deutet beispielhaft an, dass die Geometrien der einander gegenüberliegenden Oberflächen der Strebe 42a - sei es in einer axialen Sicht oder in einer seitlichen Sicht - nicht notwendigerweise gleich ausgestaltet sein müssen. Beispielsweise kann eine Seite der Strebe 42a durch die Geraden 54 definiert sein, während die andere Seite eben ist oder eine gekrümmte Kontur aufweist.

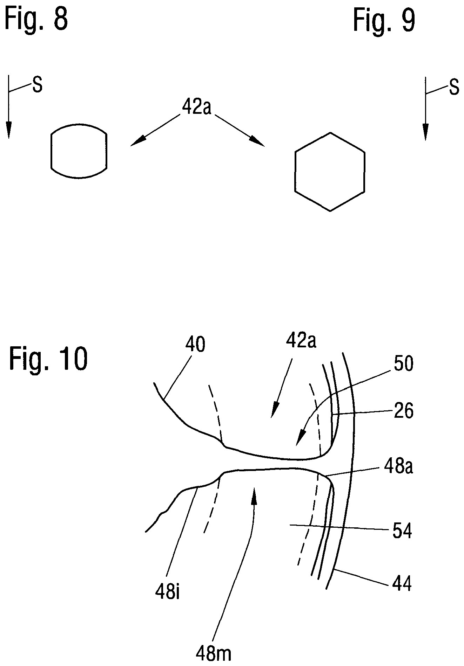

Die Fig. 8 und 9 zeigen Querschnitte durch verschiedene Ausführungsformen der Strebe 42a in einem Querschnitt senkrecht zu deren Längserstreckung. Bevorzugt sind die der Strömungsrichtung S der Vakuumpumpe 10 zugewandten Seiten der Strebe 42a gekrümmt ausgebildet oder weisen geneigte Ebenen auf (vgl. Fig. 8 bzw. Fig. 9). Alternativ oder zusätzlich können auch die anderen Seiten der Strebe 42a gekrümmte und/oder geneigte Abschnitte aufweisen.

Um einen besonders großen strömungstechnischen Vorteil zu erzielen, kann die Einschnürung 50 in einer axialen Projektion in einem Ringbereich 54 liegen, der durch die die Pumpwirkung erzeugenden Rotorblätter der Rotorscheibe 26 definiert wird. In diesem Bereich ist nämlich die von der Rotorscheibe 26 erzeugte Strömung am größten. Eine massivere Ausgestaltung der Übergangsabschnitte 48i, 48a, die in radialer Richtung außerhalb des durch die Rotorblätter der Rotorscheibe 26 definierten Ringbereichs 54 liegen, stört dahingegen kaum. Die dort auftretenden, besonders großen Belastungen können durch die massivere Ausgestaltung der Übergangsabschnitte 48i, 48a besser aufgenommen werden.

Zusammenfassend lässt sich festhalten, dass der vorliegenden Erfindung die Erkenntnis zugrunde liegt, dass - anders als bislang gedacht - mittlere Bereiche der Streben der Halterung für das Lager der Rotorwelle einer Vakuumpumpe deutlich geringeren Belastungen ausgesetzt sind als deren radial inneren bzw. äußeren Enden. Basierend darauf wurde erfindungsgemäß erkannt, dass die Streben in dem mittleren Bereich eine Querschnittsreduktion aufweisen können, wodurch Material gespart wird und der auf die Streben zurückgehende Strömungswiderstand erniedrigt wird.

### Bezugszeichenliste

- 10: Vakuumpumpe
- 12: Einlassflansch
- 14: Pumpeneinlass
- 16: Pumpenauslass
- 18: Gehäuse
- 20: Rotor
- 22: Rotationsachse
- 24: Rotorwelle
- 26: Rotorscheibe
- 28: Statorscheibe
- 30: Abstandsring
- 32: Wälzlager
- 34: Permanentmagnetlager
- 36: rotorseitige Lagerhälfte
- 38: statorseitige Lagerhälfte
- 40: Trägerabschnitt
- 42, 42a, 42b, 42c: Strebe
- 44: Gehäusering
- 46: Halterung
- 48i, 48a: Übergangsabschnitt
- 48m: Mittelabschnitt
- 50: Einschnürung
- 52a, 52b, 52c, 52d: Kontur
- 54: Ringbereich
- S: Strömungsrichtung
- A: Schnittebene

## Patentansprüche

1. Vakuumpumpe, insbesondere Turbomolekularpumpe, mit einem Gehäuse (18),
einer drehbar gelagerten Welle (24) für zumindest eine Pumpstufe und einer in einem Ansaugbereich (14) der Vakuumpumpe gelegenen Halterung (46) für ein Lager (34) zur Lagerung der Welle (24),
wobei die Halterung (46) einen das Lager (34) aufnehmenden Zentralabschnitt (40) und eine Mehrzahl von sich zumindest im Wesentlichen in radialer Richtung erstreckenden Streben (42a, 42b, 42c) umfasst, die den Zentralabschnitt (40) mit einem mit dem Gehäuse (18) verbundenen Gehäusering (44) verbinden, wobei zumindest eine der Streben (42a, 42b, 42c, 42d) in einem radial mittleren Bereich (48m) eine Einschnürung (50) aufweist,
**dadurch gekennzeichnet, dass**
eine in einer axialen Projektion gesehene Kontur (52c, 52d) zumindest einer der Seiten des mittleren Bereichs (48m) zumindest abschnittsweise, insbesondere durchgehend, relativ zur Längserstreckung der Strebe (42a, 42b, 42c) schräg angeordnet ist und/oder dass
eine in einer axialen Projektion gesehene Kontur (52c, 52d) zumindest einer der Seiten des mittleren Bereichs (48m) zumindest abschnittsweise, insbesondere durchgehend gekrümmt ist, wobei eine Krümmung der Kontur zwischen dem Zentralabschnitt (40) und dem Gehäusering (44) variiert, und/oder dass
eine in einer durch die Welle (24) und eine Längserstreckung der Strebe (42a, 42b, 42c) aufgespannten Ebene gesehene Kontur (52a, 52b) zumindest einer der Seiten des mittleren Bereichs (48m) zumindest abschnittsweise, insbesondere durchgehend, gekrümmt und/oder relativ zur Längserstreckung der Strebe (42a, 42b, 42c) schräg angeordnet ist.

2. Vakuumpumpe nach Anspruch 1,
**dadurch gekennzeichnet, dass**
der mittlere Bereich (48m) in einer axialen Projektion zumindest abschnittsweise, insbesondere vollständig, in einem Bereich (54) liegt, der durch einen eine Pumpwirkung erzeugenden Abschnitt zumindest eines rotierenden Elements (26) der Pumpstufe definiert ist.

3. Vakuumpumpe nach Anspruch 1 oder 2,
**dadurch gekennzeichnet, dass**
zwischen dem Zentralabschnitt (40) und dem mittleren Bereich (48m) und/oder zwischen dem mittleren Bereich (48m) und dem Gehäusering (44) ein Übergangsabschnitt (48i, 48a) vorgesehen ist, der sich zu dem mittleren Bereich (48m) hin verjüngt.

4. Vakuumpumpe nach Anspruch 1,
**dadurch gekennzeichnet, dass**
die Kontur (52a, 52b, 52c, 52d) zumindest abschnittsweise konkav ist.

5. Vakuumpumpe nach zumindest einem der vorstehenden Ansprüche,
**dadurch gekennzeichnet, dass**
zumindest eine Oberfläche der Strebe (42a, 42b, 42c) in einer Richtung senkrecht zu der Längserstreckung der Strebe (42a, 42b, 42c) eine Krümmung aufweist.

6. Vakuumpumpe nach Anspruch 5,
**dadurch gekennzeichnet, dass**
eine in axialer Richtung gesehene obere Fläche und/oder untere Fläche der Strebe (42a, 42b, 42c) zumindest abschnittsweise eine Kegelmantelfläche bilden.

7. Vakuumpumpe nach zumindest einem der vorstehenden Ansprüche,
**dadurch gekennzeichnet, dass**
zumindest eine Oberfläche der Strebe (42a, 42b, 42c) in einer Richtung senkrecht der Längserstreckung der Strebe (42a, 42b, 42c) geneigt ist.

8. Vakuumpumpe nach zumindest einem der vorstehenden Ansprüche,
**dadurch gekennzeichnet, dass**
die Streben (42a, 42b, 42c) einstückig, insbesondere gefügekontinuierlich mit dem Gehäusering (44) und/oder dem Zentralabschnitt (40) verbunden sind.

9. Vakuumpumpe nach zumindest einem der vorstehenden Ansprüche,
**dadurch gekennzeichnet, dass**
der Gehäusering (44) einstückig, insbesondere gefügekontinuierlich mit dem Gehäuse (18) ausgebildet ist.

10. Vakuumpumpe nach zumindest einem der vorstehenden Ansprüche,
**dadurch gekennzeichnet, dass**
der Querschnitt der Strebe (42a, 42b, 42c) eine ovale oder gerundete, insbesondere kreisförmige Grundform aufweist.

11. Vakuumpumpe nach zumindest einem der vorstehenden Ansprüche,
**dadurch gekennzeichnet, dass**
der Querschnitt der Streben (42a, 42b, 42c) eine rechteckige, insbesondere quadratische Grundform aufweist.

12. Vakuumpumpe nach zumindest einem der vorstehenden Ansprüche,
**dadurch gekennzeichnet, dass**
die Halterung (46) genau drei Streben (42a, 42b, 42c) umfasst.

13. Vakuumpumpe nach zumindest einem der vorstehenden Ansprüche,
**dadurch gekennzeichnet, dass**
zumindest zwei Streben (42a, 42b, 42c) vorgesehen sind, die in Umfangsrichtung gleichmäßig verteilt angeordnet sind.

## Claims

1. A vacuum pump, in particular a turbomolecular pump, comprising a housing (18);
a rotatably supported shaft (24) for at least one pump stage; and
a holder (46) for a bearing (34) for supporting the shaft (24), said holder (46) being disposed in a suction region (14) of the vacuum pump, wherein the holder (46) has a central section (40) receiving the bearing (34) and has a plurality of struts (42a, 42b, 42c) which at least substantially extend in a radial direction and which connect the central section (40) to a housing ring (44) connected to the housing (18); and wherein at least one of the struts (42a, 42b, 42c, 42d) has a constriction (50) in a radially middle region (48m),
**characterized in that**
a contour (52c, 52d), viewed in an axial projection, of at least one of the sides of the middle region (48m) is arranged at least sectionally, in particular continuously, obliquely relative to a longitudinal extent of the strut (42a, 42b, 42c); and/or **in that**
a contour (52c, 52d), viewed in an axial projection, of at least one of the sides of the middle region (48m) is curved at least sectionally, in particular continuously, with a curvature of the contour varying between the central section (40) and the housing ring (44);
and/or **in that**
a contour (52c, 52d), viewed in a plane spanned by the shaft (24) and by a longitudinal extent of the strut (42a, 42b, 42c), of at least one of the sides of the middle region (48m) is curved at least sectionally, in particular
continuously, and/or is arranged at least sectionally, in particular
continuously, obliquely relative to the longitudinal extent of the strut (42a, 42b, 42c).

2. A vacuum pump in accordance with claim 1,
**characterized in that**
the middle region (48m) is disposed in an axial projection at least sectionally, in particular completely, in a region (54) which is defined by a section of at least one rotating element (26) of the pump stage generating a pumping effect.

3. A vacuum pump in accordance with claim 1 or claim 2,
**characterized in that**
a transition section (48i, 48a) which tapers toward the middle region (48m) is provided between the central section (40) and the middle region (48m) and/or between the middle region (48m) and the housing ring (44).

4. A vacuum pump in accordance with claim 1,
**characterized in that**
the contour (52a, 52b, 52c, 52d) is at least sectionally concave.

5. A vacuum pump in accordance with at least one of the preceding claims,
**characterized in that**
at least one surface of the strut (42a, 42b, 42c) has a curvature in a direction perpendicular to the longitudinal extent of the strut (42a, 42b, 42c).

6. A vacuum pump in accordance with claim 5,
**characterized in that**
an upper surface and/or a lower surface of the strut (42a, 42b, 42c), viewed in an axial direction, at least sectionally forms/form a conical jacket surface.

7. A vacuum pump in accordance with at least one of the preceding claims,
**characterized in that**
at least one surface of the strut (42a, 42b, 42c) is inclined in a direction perpendicular to the longitudinal extent of the strut (42a, 42b, 42c).

8. A vacuum pump in accordance with at least one of the preceding claims,
**characterized in that**
the struts (42a, 42b, 42c) are connected in one piece, in particular in a continuous structure, to the housing ring (44) and/or to the central section (40).

9. A vacuum pump in accordance with at least one of the preceding claims,
**characterized in that**
the housing ring (44) is connected in one piece, in particular in a continuous structure, to the housing (18).

10. A vacuum pump in accordance with at least one of the preceding claims,
**characterized in that**
the cross-section of the strut (42a, 42b, 42c) has an oval basic shape or a rounded basic shape, in particular a circular basic shape.

11. A vacuum pump in accordance with at least one of the preceding claims,
**characterized in that**
the cross-section of the struts (42a, 42b, 42c) has a rectangular basic shape, in particular a square basic shape.

12. A vacuum pump in accordance with at least one of the preceding claims,
**characterized in that**
the holder (46) comprises exactly three struts (42a, 42b, 42c).

13. A vacuum pump in accordance with at least one of the preceding claims,
**characterized in that**
at least two struts (42a, 42b, 42c) are provided which are arranged uniformly distributed in a peripheral direction.

## Revendications

1. Pompe à vide, en particulier pompe turbomoléculaire, comportant
un boîtier (18),
un arbre (24) monté mobile en rotation pour au moins un étage de pompage, et
une monture (46) située dans une zone d'aspiration (14) de la pompe à vide et destinée à un palier (34) pour monter l'arbre (24),
la monture (46) comprenant une portion centrale (40) recevant le palier (34), et une pluralité d'entretoises (42a, 42b, 42c) qui s'étendent au moins sensiblement en direction radiale et qui relient la portion centrale (40) à un anneau de boîtier (44) relié au boîtier (18), l'une au moins des entretoises (42a, 42b, 42c) présentant un rétrécissement (50) dans une zone radialement médiane (48m),
**caractérisée en ce que**
un contour (52c, 52d), vu dans une projection axiale, de l'un au moins des côtés de la zone médiane (48m) est agencé en oblique au moins localement, en particulier en continu, par rapport à l'extension longitudinale de l'entretoise (42a, 42b, 42c), et/ou **en ce que**
un contour (52c, 52d), vu dans une projection axiale, de l'un au moins des côtés de la zone médiane (48m) est agencé de façon incurvée au moins localement, en particulier en continu, une courbure du contour variant entre la portion centrale (40) et l'anneau de boîtier (44), et/ou **en ce que** un contour (52a, 52b), vu dans un plan défini par l'arbre (24) et par une extension longitudinale de l'entretoise (42a, 42b, 42c), de l'un au moins des côtés de la zone médiane (48m) est incurvé et/ou agencé en oblique au moins localement, en particulier en continu, par rapport à l'extension longitudinale de l'entretoise (42a, 42b, 42c).

2. Pompe à vide selon la revendication 1,
**caractérisée en ce que**
dans une projection axiale, la zone médiane (48m) se situe au moins localement, en particulier complètement, dans une zone (54) qui est définie par une portion d'au moins un élément rotatif (26) de l'étage de pompage, qui engendre un effet de pompage.

3. Pompe à vide selon la revendication 1 ou 2,
**caractérisée en ce que**
entre la portion centrale (40) et la zone médiane (48m) et/ou entre la zone médiane (48m) et l'anneau de boîtier (44), il est prévu une portion de transition (48i, 48a) qui va en se rétrécissant vers la zone médiane (48m).

4. Pompe à vide selon la revendication 1,
**caractérisée en ce que**
le contour (52a, 52b, 52c, 52d) est au moins localement concave.

5. Pompe à vide selon l'une au moins des revendications précédentes,
**caractérisée en ce que**
au moins une surface de l'entretoise (42a, 42b, 42c) présente une courbure dans une direction perpendiculaire à l'extension longitudinale de l'entretoise (42a, 42b, 42c).

6. Pompe à vide selon la revendication 5,
**caractérisée en ce que**
une surface supérieure et/ou une surface inférieure, vues en direction axiale, de l'entretoise (42a, 42b, 42c) constituent au moins localement une surface enveloppe conique.

7. Pompe à vide selon l'une au moins des revendications précédentes,
**caractérisée en ce que**
au moins une surface de l'entretoise (42a, 42b, 42c) est inclinée dans une direction perpendiculaire à l'extension longitudinale de l'entretoise (42a, 42b, 42c).

8. Pompe à vide selon l'une au moins des revendications précédentes,
**caractérisée en ce que**
les entretoises (42a, 42b, 42c) sont reliées d'un seul tenant, en particulier à structure continue, à l'anneau de boîtier (44) et/ou à la portion centrale (40).

9. Pompe à vide selon l'une au moins des revendications précédentes,
**caractérisée en ce que**
l'anneau de boîtier (44) est réalisé d'un seul tenant, en particulier à structure continue, avec le boîtier (18).

10. Pompe à vide selon l'une au moins des revendications précédentes,
**caractérisée en ce que**
la section transversale de l'entretoise (42a, 42b, 42c) présente une forme de base ovale ou arrondie, en particulier circulaire.

11. Pompe à vide selon l'une au moins des revendications précédentes,
**caractérisée en ce que**
la section transversale de l'entretoise (42a, 42b, 42c) présente une forme de base rectangulaire, en particulier carrée.

12. Pompe à vide selon l'une au moins des revendications précédentes,
**caractérisée en ce que**
la monture (46) comprend précisément trois entretoises (42a, 42b, 42c).

13. Pompe à vide selon l'une au moins des revendications précédentes,
**caractérisée en ce que**
il est prévu deux entretoises (42a, 42b, 42c) qui sont agencées en étant réparties régulièrement en direction périphérique.
